Europäisches Patentamt

(19) European Patent Office

Office européen des brevets

(11) Publication number: **0 208 816**
**B1**

## (12) EUROPEAN PATENT SPECIFICATION

(45) Date of publication of the patent specification:
**14.06.89**

(21) Application number: **85305058.1**

(22) Date of filing: **16.07.85**

(51) Int. Cl.⁴: **E21D 9/12, B65G 53/30**

(54) Tunnel boring machine.

(43) Date of publication of application:
**21.01.87 Bulletin 87/4**

(45) Publication of the grant of the patent:
**14.06.89 Bulletin 89/24**

�ividedContracting States:
**DE FR GB**

(56) References cited:
**DE-A- 2 351 351**
**US-A- 3 931 999**

**INTERNATIONAL CONSTRUCTION, vol. 15, June 1976,
pages 56-60, Haywards Heath, GB; "First commercial
contract for UK bentonite shield"**

(73) Proprietor: **KAWASAKI JUKOGYO KABUSHIKI KAISHA,
1-1 Higashikawasaki-cho 3-chome, Chuo-ku Kobe-shi
Hyogo-ken(JP)**

(72) Inventor: **Sakoi, Kozo, 1204-39, Kitano Noguchicho,
Kakogawa-shi(JP)**
Inventor: **Kondo, Yasunori, 905-47, Hiraokacho,
Kakogawa-shi(JP)**
Inventor: **Fujioka, Kazuo, 1-4-433, Izumigaoka-3-chome
Tarumi-ku, Kobe(JP)**

(74) Representative: **Nettleton, John Victor et al, Abel &
Imray Northumberland House 303-306 High Holborn,
London, WC1V 7LH(GB)**

## Description

BACKGROUND OF THE INVENTION

The present invention relates to a tunnel boring machine with a jet pump and, more particularly, to a tunnel boring machine having an improved means for transporting muck produced during the boring.

Tunnel boring machines are broadly used for boring various tunnels such as those for underground passages, subways and so forth. During boring with the tunnel boring machines, a large quantity of muck is produced. The muck has to be transported by, for example, conveyor belt and then transported by trucks. In the use of this tunnel boring machine, problems are encountered such as long waiting time for the trucks, danger caused by trucks running in the tunnel, deterioration of the working conditions due to generation of dust during boring, and so forth. In addition, it is often experienced that water springing out from the face causes a slip in the conveyor belt, seriously hindering the transportation of the muck. Furthermore, the conventional tunnel boring machine, which has an open front end, is not protected against collapse of the face ahead of the machine. Muck transportation means incorporating a jet pump has been proposed and used, in order to obviate the problems mentioned above. For instance, Japanese Patent Laid-Open No. 31400/1984 discloses a tunnel boring machine having a jet pump. Various boring machines having a muck transportation means with a jet pump, such as shield boring machine, tunnel boring machines and so forth will be generally referred to as «tunnel boring machine», hereinunder. In this type of tunnel boring machine, the muck produced during the boring are sucked together with dust and water by the jet pump which has a strong suction power and are transported through ducts or pipes without encountering the aforesaid problems. Unfortunately, however, there is a practical limit in the distance of transportation by the jet pump solely and further a considerably large amount of water is required for the transportation purpose.

GB-A 1 391 499 (corresponding to DE-A 2 351 351) discloses a tunnelling machine including a transverse pressure bulkhead. A working chamber between the bulkhead and the front of the shield contains a power driven rotary mechanical digging mechanism in the form of a cutter head. A thixotropic liquid suspension of sodium based bentonite slurry is pumped to the chamber so that the cutter head revolves in a sealed chamber filled with bentonite slurry under pressure. The pressurized bentonite forms a skin or filter cake on the excavated tunnel wall, the slurry penetrating the wall to stabilize and seal it.

A shute guides spoil-contaminated slurry from the chamber through an extractor and into a wet sump where any cobbles of over 100 mm are sifted out. The spoile-contaminated slurry is then pumped to a vibrating screen separator and then to four cyclones which remove sand particles larger than 75 micrometres. The sand removed is collected in a tank and the clean bentonite slurry left is discharged from the cyclones into another tank for temporary storage. From the tank, the clean bentonite slurry is delivered to the tunnel by a pump and divided between the wet sump and the extractor.

The document INTERNATIONAL CONSTRUCTION; vol. 15, June 1976, pages 56–60, Haywards Heath, GB; «First commercial contract for UK bentonite shield» describes what is evidently a commercial application of the tunnelling machine disclosed in GB-A 1 391 499. The document includes a drawing which appears to be a pictorialized version of Figure 1 of the patent specification and explains that a conveyor belt had originally been fitted to carry away the spoil. However the mixture of ground water and rock, broken down to sand by the cutters, was causing problems for the conveyor belt. Consequently it was replaced by an hydraulic system and a chute which was fitted into the slurry pump. The description that «With this hydraulic system the bentonite slurry is circulated through the pressure chamber in the machine so that as well as providing support for an otherwise unstable face, it can also be used as a transporting medium for the excavated material to be pumped from the tunnel to the surface» accords with the disclosure in the patent where the vibrating screen separator and the cyclones are shown above ground. Corresponding to the wet sump, below ground, of the patent «where any cobbles of over 100 mm are sifted out» is a sump with a 4 inch grid (4 inches are approximately 100 mm) sited in the same position as the sump in the patent.

SUMMARY OF THE INVENTION

Accordingly, an object of the invention is to provide a tunnel boring machine having a muck transportation means with a jet pump capable of transporting muck, dusts and water over a long distance and at high performance.

To this end, according to the invention, there is provided a tunnel boring machine having a muck transportation means incorporating a jet pump, wherein the muck transportation means includes: an atmospheric tank communicating with the outlet of the jet pump and having a water level detector; a discharge pump communicating with the outlet of the atmospheric tank; a flow meter adapted for detecting the discharge flow rate of the discharge pump and for maintaining the discharge flow rate of the discharge pump at a constant level; a feedwater pump adapted to discharge feedwater at a discharge flow rate which is controlled by the water level detector; and a water supply pump having suction and discharge ports, the suction port communicating with the discharge port of the feedwater pump and capable of communicating with the atmospheric tank, the discharge port of the water supply pump communicating with the inlet of the jet pump.

In the tunnel boring machine of the invention, since a pump system for transporting the muck is provided downstream of the piping system of the jet pump, the muck can be transported continuously and efficiently regardless of the length of the tunnel, i.e., the distance travelled by the boring machine. In addition, since transportation of the muck is conducted by a pipe line system, there is no need for using any trucks so that any danger attributable to the use of trucks is avoided. In a preferred form of the invention, a cutter chamber separates the face of the tunnel from the tunnel space behind the boring machine and the dusts generated in the cutter chamber are sucked and transported by the jet pump together with the muck. Therefore, the risk of invasion of dusts into the tunnel is minimized so as to considerably improve the working conditions in the tunnel.

In the operation of the tunnel boring machine of the invention, the water springing from the tunnel face can be sucked through the atmospheric tank and effectively used as the carrier water. This in turn reduces the flow rate of feedwater in the feedwater pump, thus minimizing the required capacity and, hence, the power of the feedwater pump. In the event that air in the cutter chamber has been sucked by the jet pump, the water is relieved to the atmosphere at the atmospheric tank, so that the cavitation in the pump of the pump system arranged downstream of the atmospheric tank is avoided advantageously. This in turn eliminates the necessity for filling up the cutter chamber with water, so that the operator can visually observe the tunnel face from a position behind the cutter chamber. This permits the operator to operate the machine in accordance with the nature of the tunnel face ahead of the boring machine and, hence, to attain a high boring performance. The jet pump can handle a large size of rock particles generally up to 2/3 of the diameter of the pipe constituting the pipe line system, so that the transportation of the rock particles can be conducted efficiently.

BRIEF DESCRIPTION OF THE DRAWINGS

Fig. 1 is a vertical sectional view of the main part of a tunnel boring machine in accordance with the invention; and
Fig. 2 is a system diagram of a muck transportation means incorporated in the embodiment shown in Fig. 1.

DESCRIPTION OF THE PREFERRED EMBODIMENTS

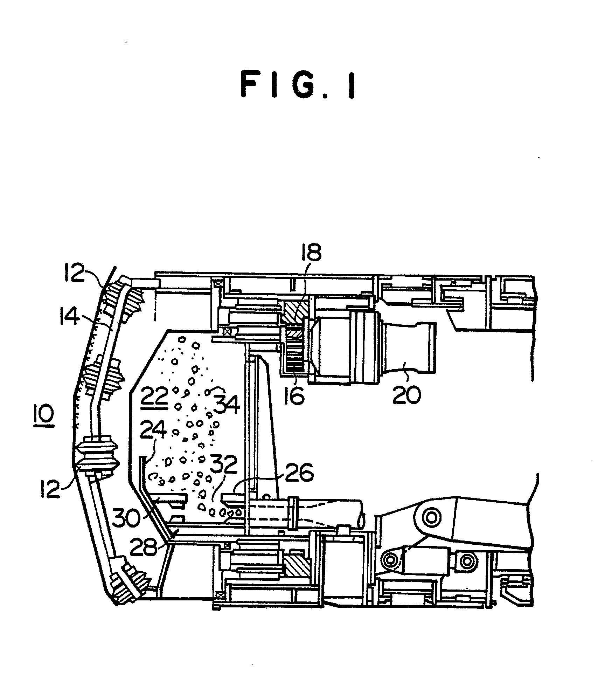

Referring to Fig. 1, a tunnel boring machine embodying the present invention has a cutter disk 14 provided with a plurality of cutters 12 for cutting the tunnel face 10. The cutter disk 14 is adapted to be driven rotationally by a driving motor 20 through transmission gears 16 and 18. A cutter chamber 22 is formed behind the cutter disk 14. The rock particles, sand and so forth, i.e. muck, produced as a result of cutting by the rotating cutter disc 14 are collected by and transported through a hopper 24 which is disposed in a lower portion of the cutter chamber 22. A jet pump 28 disposed under the bottom 26 of the hopper 24 has a casing 30 having an opening 32 formed in communication with the bottom 26 of the hopper 24.

The jet pump 28 is adapted for transporting the rock particles, sand and so forth (referred to simply as "muck" with a numeral 34 hereinunder) to the outside of the machine. As stated before, the jet pump 28 is disposed at the lower side of the hopper 24 with its opening 32 directed upwardly, so that the opening 32 can receive the muck 34 which naturally falls into the hopper 24 by the force of gravity. The upwardly directed opening 32 also sucks the muck 34 by the aid of vacuum of the jet pump 28.

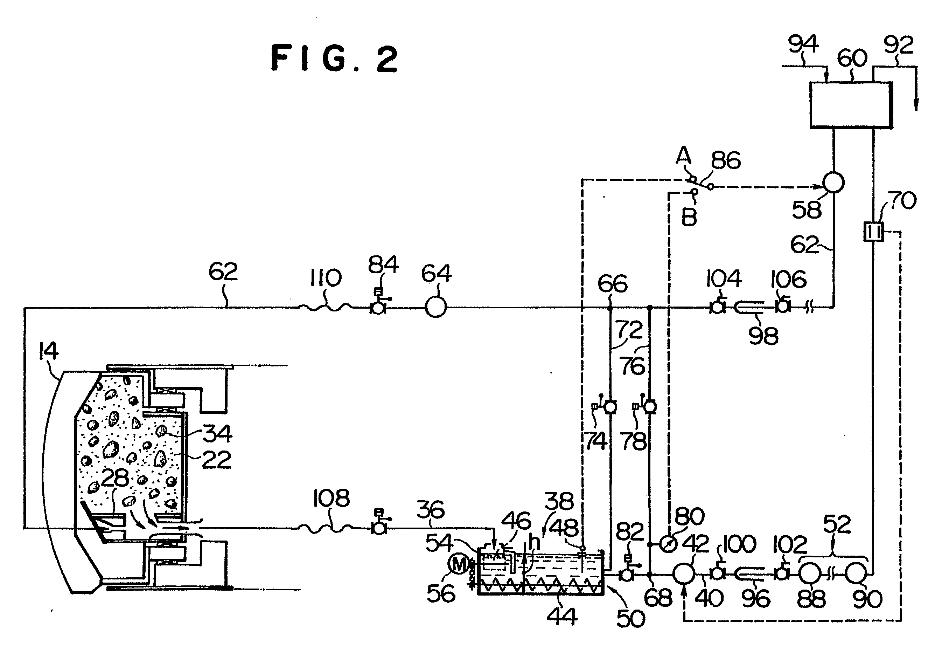

The characterizing part of the invention is shown schematically in Fig. 2. A muck transportation means is connected to the main part of the tunnel boring machine.

A pipe line denoted by a numeral 36 is connected to the outlet side of the jet pump 28. Rock particles 34, feedwater, water springing from the face, dusts and so forth are transported through this pipe line 36. The pipe line 36 is connected downstream to an atmospheric tank 38. This tank 38 has a function to temporarily store the transported muck so as to allow the air contained in the muck to be released to the atmosphere. By virtue of this function, the invasion of air into a centrifugal discharge pump 42 provided in a discharge line 40 downstream of the atmospheric tank 38 is avoided thereby preventing any cavitation in this pump. The atmospheric tank 38 is equipped with a screw conveyor 44, crusher 46, and a water level detector 48. The screw conveyor 44 is provided on the bottom 50 of the atmospheric tank 38 so as to shift the muck accumulated on the bottom 50 towards the discharge pump 42 downstream of the atmospheric tank 38. Obviously, the means for shifting the muck may be constituted by other similar means such as a chain conveyor. If the pump system downstream of the atmospheric tank 38 has a suction power large enough to suck the muck, this suction power may be utilized as the muck shifting means. The crusher 46 may be mounted on a side wall 54 of the atmospheric tank 38 near the outlet of the conveyor pipe line 36 or, alternatively, may be provided in the vicinity of the inlet of the jet pump 28 although not illustrated. The crusher 46 and the screw conveyor 44 are driven by a common driving motor 56, although they may be driven independently by separate driving means. The water level detector 48 is adapted to detect the water level in the atmospheric tank 38 and to produce a signal for controlling the flow rate of feedwater fed by a feedwater pump 58. The feedwater pump 58 is disposed in a feedwater line 62 leading from a separation system 60 which will be explained later. A water line 72 leading to the atmospheric tank 38 branches off from the feedwater line 62 at a point 66 downstream of the feedwater pump 58. The feedwater line 62 has a water supply pump 64 which is disposed downstream of the branching point 66. The water supply pump 64 is adapted to deliver water to the jet pump 28 at a predetermined flow rate, in accordance with the discharge flow rate of the feedwater pump 58. The discharge pump 42 mentioned before is disposed downstream of a branching point 68 at the outlet side of the atmospheric tank 38 so as to discharge the muck from the atmospheric tank 38 into the separation system 60. The flow rate through this pump 42 is controlled in accordance with a flow rate signal which is produced by a flow meter 70 provided near the outlet of the discharge line 40.

In the separation system 60, water is separated from the muck transported by the discharge pump 42 and other discharge pumps 88, 90. The thus separated water is recirculated through the feedwater line 62 for repeated use. The water line 72, which will be referred to as "by-pass line", branching off from the feedwater line 62 at the point 66, has an automatic by-pass valve 74 which can open and block the by-pass line 72. Further, another by-pass line 76, which branches off from the feedwater line 62 upstream of the point 66 and leads to the branching point 68 on the discharge line 40, has an automatic by-pass valve 78 and a pressure detector 80. The pressure detector 80 detects the outlet pressure of the by-pass line 76 and delivers a signal for controlling the discharge pressure of the feedwater pump 58. A reference numeral 82 designates an automatic slurry valve disposed in the discharge line 40 near the outlet of the atmospheric tank 38, while a numeral 84 designates a driving water valve disposed in the portion of the feedwater line 62 downstream of the water supply pump 64. A change-over switch 86 is adapted to conduct a switching over between the signals to be delivered to the feedwater pump 58, so that either the water level signal from the water level detector 48 or the pressure signal from the pressure detector 80 is selected by the change-over switch 86 and delivered to the feedwater pump 58.

The operation of this embodiment is as follows:

In the first preparatory step of operation, the automatic by-pass valve 74 in the by-pass line 72, automatic slurry valve 82 in the discharge line 40 and the automatic driving water valve 84 in the feedwater line 62 are all closed, while the automatic by-pass valve 78 in the other by-pass line 76 is opened, so that a closed circuit is completed such as to include the separation system 60, feedwater line 62, by-pass line 76 and the discharge line 40. Then, the feedwater pump 58, discharge pump 42 in the discharge line 40 and other discharge pumps 88, 90 are driven and the change-over switch 86 is switched from the illustrated position, i.e., contact A, to the other contact B. Therefore, the pressure detector 80 in the by-pass line 76 detects the pressure of the feedwater flowing in this line and the signal representing this pressure is delivered to the feedwater pump 58. More specifically, when the detected pressure is negative, the signal for increasing the discharge pressure of the feedwater pump 58 is produced so as to prevent any cavitation in the discharge pump 42 which is disposed downstream of the pressure detector 80. Conversely, when the detected pressure is higher than a predetermined limit pressure, the signal is produced so as to lower the discharge pressure of the feedwater pump 58, because such a high pressure may compulsorily rotate the discharge pump 42 causing an increase in possibility of the discharge pump 42 being damaged.

This limit pressure may be higher than the atmospheric pressure Po by a pressure which substantially corresponds to the water head $\underline{h}$ in the atmospheric tank 38. The discharge flow rate of the discharge pump 42 is controlled at a predetermined level in accordance with the signal from the flow meter 70 which is provided near the outlet of the discharge line 40. Thus, the feedwater discharged by the feedwater pump 58 flows through the closed circuit at the predetermined flow rate and pressure which are detected and maintained by the pressure detector 80 and the flow water 70.

After a steady flow has been established, the second preparatory step of operation is conducted in which the automatic by-pass valve 74 in the by-pass line 72 and the automatic slurry valve 82 in the discharge line 40 are opened while the change-over switch 86 is switched from the contact B to the contact A. As a result, the water level signal from the water level detector 48 in the atmospheric tank 38 is delivered to the feedwater pump 58 instead of the pressure signal from the pressure detector 80. In this condition, the discharge flow rate of the discharge pump 42 is controlled by the signal from the flow meter 70. In this state, the water discharged from the feedwater pump 58 flows through two closed circuits: namely, a closed circuit constituted by the feedwater line 62, branching point 66, by-pass line 72, atmospheric tank 38, discharge line 40 and the separation system 60, and a closed circuit constituted by the feedwater line 62, by-pass line 76, branching point 68, discharge line 40 and the separation system 60. The discharge flow rate of the feedwater pump 58 is maintained such that a constant water level $\underline{h}$ is maintained in the atmospheric tank 38. Since the pressure in the by-pass line 76 is controlled at a constant level, there is no risk of cavitation in the discharge pump 42 of the discharge line 40.

When the steady state of flow in the two closed circuits is established, the third preparatory step of operation is conducted in which the automatic by-pass valve 78 in the by-pass line 76 is closed. In consequence, the feedwater from the feedwater pump 58 flows through a closed circuit constituted by the feedwater line 62, branching point 66, by-pass line 72, atmospheric tank 38, discharge line 40 and the separation system 60. Since the water level in the atmospheric tank 38 is still maintained constant by the operation of the water level detector 48, a constant discharge pressure is maintained at the outlet of the atmospheric tank 38, so that there is no risk of cavitation to occur in the discharge pump 42.

Needless to say, the discharge flow rate of the discharge pump 42 is kept under the control of the flow rate 70.

Then, in the fourth or final preparatory step, the automatic driving water valve 84 in the feedwater line 62 is opened and the water supply pump 64 is started, so that a part of the feedwater from the feedwater pump 58 is made to flow through the portion of the feedwater line 62 downstream of the branching point 66, water supply pump 64, jet pump 28, conveyor pipe line 36 and the atmospheric tank 38. The other part of the water from the feedwater pump 58 flows into the atmospheric tank 38 through the by-pass line 72. As in the preceding steps, a constant water level is maintained in the atmospheric tank 38, by virture of the water level detector 48. The discharge pump 42 discharges the muck from the atmospheric tank 38 into the separation system 60 at a constant flow rate under the control of the signal from the flow meter 70.

After the completion of the first to fourth preparatory steps, the tunnel boring machine is started to commence the boring. As the tunnel face is cut by the cutters 12 on the cutter disc 14, the rock particles 34 and others are taken into the cutter chamber 22 and are sucked by the jet pump 28 and is forwarded by the latter to the atmospheric tank 38 through the conveyor pipe line 36. The rock particles 34 are crushed by the crusher 46 into smaller sizes for easier transportation through the discharge line 40 downstream of the atmospheric tank 38. The crushed rock particles are accumulated on the bottom 50 of the atmpsheric tank 38. The water level in the atmospheric tak 38 tends to rise due to, for example, an increase in the flow rate of water springing from the tunnel face, but is maintained constant by the operation of the water level detector 48 operative in response to the water level. For instance, when the water level in the atmospheric tank 38 comes down, the water level detector 48 produces a signal such as to increase the discharge flow rate of the feedwater pump 58. As a result, the flow rate of the feedwater from the feedwater pump 58 exceeds the rate required for the jet pump 28, and the surplus water is introduced into the atmospheric tank 38 through the by-pass line 72. Thus, the jet pump 28 is supplied with water at a constant flow rate which is suitable for the operation thereof. In the case of springing of large quantity of water from the tunnel face, this water also is transported to the atmospheric tank 38 by the jet pump 28, causing a rising tendency of the water level in the atmospheric tank 38. Upon detect of this tendency, the water level detector 48 produces a signal for reducing the discharge flow rate of the feedwater pump 58. In this state, the water discharged by the feedwater pump 58 is insufficient for the operation of the jet pump 28. However, the water supply pump 64 takes up, from the atmospheric tank 38, the surplus water springing up from the tunnel face, and supplies this water to the jet pump 28, so that the water level in the atmospheric tank 38 is maintained at the constant level. While the constant water level is maintained in the atmospheric tank 38, the rock particles 34 in the atmospheric tank 38 is shifted by the screw conveyor 44 towards the discharge line 40 and is discharged together with other muck by the discharge pump 42 at a constant flow rate under the control of the signal from the flow meter 70. The muck is then forwarded to the separation system 60 through other discharge pumps 88 and 90.

In the separation system 60, water content is separated from the muck and the thus separated water is sucked by the feedwater pump 58. Meanwhile, the rock particles are sent to and processed by other processing systems. When the rate of springing water is increased, the surplus water can overflow the separation system 60 as indicated by an arrow line 92. In the case of shortage of water in the initial period of operation, make-up water may be supplied as shown by an arrow line 94.

During the boring, the tunnel boring machine itself progressively moves forwardly, so that part of the muck transportation means such as the conveyor pipe line 36, atmospheric tank 38, discharge pump 42, water supply pump 64 and so forth are towed and moved forwardly by the tunnel boring machine. On the other hand, other parts such as the pump system 52, separation system 60, feedwater pump 58 and so forth are kept stationary. This is possible because of presence of extensible pipes 96 and 98 at intermediate portions of the discharge line 40 and the feedwater line 62. Stop valves 100, 102, 104 and 106 are disposed upstream and downstream of the extensible pipes 96 and 98. When the tunnel boring machine has travelled a predetermined distance, the boring operation is stopped to conduct an extension of the pipes. Namely, an operation is conducted for contracting the extensible pipes 96, 98 which have been extended, and then additional pipes are inserted behind the extensible pipes 96, 98, the additional pipes having lengths corresponding to the travelled distance. Then, the boring machine is started again to for the boring. Any deflection of the conveyor pipe line 36 and the feedwater line 62, attributable to the offset between the boring machine and the muck transportation means, is absorbed by flexible portions 108 and 110 which are provided at intermediate portions of the conveyor pipe line 36 and the feedwater line 62.

In the illustrated embodiment, the crusher 46 provided in the atmospheric tank 38 crushes the rock particles into smaller size, so that the diameter of the pipe system downstream of the atmospheric tank 38 can be reduced advantageously. As explained before, the screw conveyor 44 for shifting the muck accumulated on the bottom of the atmospheric tank 38 can be substituted by any other suitable shifting means such as a chain conveyor.

## Claims

1. A tunnel boring machine comprising a main part of boring machine having a rotatable cutter disc (14) and a cutter chamber (22) capable of receiving muck, and muck transportation means having a jet pump (28) with an opening (32) communicating with the cutter chamber (22), characterized in that said muck transportation means includes:
   an atmospheric tank (38) communicating with an outlet of said jet pump (28) and having a water level detector (48);
   a discharge pump (42) communicating with an outlet of said atmospheric tank (38);
   a flow meter (70) adapted for detecting a discharge flow rate of said discharge pump (42) and for maintaining the discharge flow rate of said discharge pump (42) at a constant level;
   a feedwater pump (58) adapted to discharge feedwater at a discharge flow rate which is controlled by said water level detector (48); and

a water supply pump (64) having suction and discharge ports, said suction port communicating with a discharge port of said feedwater pump (58) and capable of communicating with said atmospheric tank (38), said discharge port of said water supply pump (64) communicating with an inlet of said jet pump (28).

2. A tunnel boring machine according to claim 1, characterized in that said muck transportation means further includes a separation system (60) disposed between a discharge side of said discharge pump (42) and a suction side of said feedwater pump (58) and adapted for separating water content from muck.

3. A tunnel boring machine according to claim 2, characterized in that said muck transportation means includes:

a first by-pass line (76) arranged between the discharge side of said feedwater pump (58) and the suction side of said discharge pump (42) and having a first by-pass valve (78) disposed therein;

a second by-pass line (72) arranged between the discharge side of said feedwater pump (58) and said atmospheric tank (38) and having a second by-pass valve (74) disposed therein;

a slurry valve (82) disposed between said first by-pass line (76) and said atmospheric tank (38);

a driving water valve (84) disposed between said water supply pump (64) and said jet pump (28);

a pressure detector (80) provided in said first by-pass line (76); and

a change-over switch for selectively delivering one of the signal from said pressure detector (80) and the signal from said water level detector to said feedwater pump (58).

4. A tunnel boring machine according to claim 1, characterized in that said atmospheric tank (38) includes a crusher (46) disposed in the vicinity of an inlet of said atmospheric tank (38), and muck shifting means (44) provided on a bottom (50) of said atmospheric tank (38).

5. A tunnel boring machine according to claim 4, characterized in that said muck shifting means is a screw conveyor (44).

## Patentansprüche

1. Tunnelbohrmaschine mit einem Bohrmaschinen-Hauptteil, der eine drehbare Bohrerscheibe (14) und eine Bohrerkammer (22) hat, die Bohrabfall aufnehmen kann, und mit einer Bohrabfall-Transporteinrichtung, die eine Strahlpumpe (28) mit einer Öffnung (32) hat, die mit der Bohrerkammer (22) in Verbindung steht, dadurch gekennzeichnet, daß die Bohrabfall-Transporteinrichtung enthält:

einen atmosphärischen Tank (38), der mit einem Auslaß der Strahlpumpe (28) in Verbindung steht und einen Wasserpegel-Detektor (48) hat;

eine Abzugspumpe (42), die mit einem Auslaß des atmosphärischen Tanks (38) in Verbindung steht;

einen Flußmesser (70) für die Erfassung einer Abzugsflußraste der Abzugspumpe (42) und zum Halten der Abzugsflußrate der Abzugspumpe (42) auf einem konstanten Pegel;

eine Speisewasserpumpe (58) zum Abziehen von Speisewasser mit einer Abzugsflußrate, die durch den Wasserpegel-Detektor (48) gesteuert wird; und

eine Wasserversorgungspumpe (64) mit Ansaug- und Abzugsöffnungen, wobei die Ansaugöffnung mit einer Abzugsöffnung der Speisewasserpumpe (58) in Verbindung steht und mit dem atmosphärischen Tank (38) in Verbindung treten kann, wobei die Abzugsöffnung der Wasserversorgungspumpe (64) mit einem Einlaß der Strahlpumpe (28) in Verbindung steht.

2. Tunnelbohrmaschine nach Anspruch 1, dadurch gekennzeichnet, daß die Bohrabfall-Transporteinrichtung weiterhin ein Trennsystem (60) enthält, das zwischen einer Abzugsseite der Abzugspumpe (42) und einer Ansaugseite der Speisewasserpumpe (58) angeordnet ist und für die Absonderung eines Wasseranteils vom Bohrabfall ausgelegt ist.

3. Tunnelbohrmaschine nach Anspruch 2, dadurch gekennzeichnet, daß die Bohrabfall-Transporteinrichtung enthält:

eine erste Bypass-Leitung (76), die zwischen der Abzugsseite der Speisewasserpumpe (58) und der Ansaugseite der Abzugspumpe (42) angeordnet ist und ein erstes Bypass-Ventil (78) hat, das darin angeordnet ist;

eine zweite Bypass-Leitung (72), die zwischen der Abzugsseite der Speisewasserpumpe (58) und dem atmosphärischen Tank (38) angeordnet ist und ein zweites Bypass-Ventil (74) hat, das darin angeordnet ist;

ein Schlammventil (82), das zwischen der ersten Bypass-Leitung (76) und dem atmosphärischen Tank (38) angeordnet ist;

ein Aufschlagwasserventil (84), das zwischen der Wasserversorgungspumpe (64) und der Strahlpumpe (28) angeordnet ist;

einen Druckdetektor (80), der in der ersten Bypass-Leitung (76) vorgesehen ist; und einen Umschalter zum wahlweisen Zuführen eines der Signale von dem Druckdetektor (80) und von dem Wasserpegel-Detektor zu der Speisewasserpumpe (58).

4. Tunnelbohrmaschine nach Anspruch 1, dadurch gekennzeichnet, daß der atmosphärische Tank (38) ein Brechwerk (46), das in der Nähe eines Einlasses des atmosphärischen Tanks (38) angeordnet ist, und eine Bohrabfall-Verschiebeeinrichtung (44) enthält, die auf einem Boden (50) des atmosphärischen Tanks (38) vorgesehen ist.

5. Tunnelbohrmaschine nach Anspruch 4, dadurch gekennzeichnet, daß die Bohrabfall-Verschiebeeinrichtung ein Schneckenförderer (44) ist.

## Revendications

1. Machine à creuser les tunnels, comprenant une partie principale de machine de forage qui comporte un disque de coupe rotatif (14) et une chambre de coupe (22) destinée à recevoir les déblais, ainsi que des moyens de transport des déblais comprenant une pompe à jet (28) avec une ouverture (32) en communication avec la chambre de la coupe (22),

caractérisée en ce que les moyens de transport des déblais comprennent:

un réservoir atmosphérique (38) communiquant avec la sortie de la pompe à jet (28) et comportant un détecteur de niveau d'eau (48);

une pompe de refoulement (42) en communication avec la sortie du réservoir atmosphérique (38);

un débitmètre (70) destiné à détecter le débit de refoulement de la pompe de refoulement (42) et à maintenir à un niveau constant le débit de refoulement de la pompe de refoulement (42);

une pompe à eau d'alimentation (58) destinée à refouler de l'eau d'alimentation à un débit de refoulement qui est commandé par le détecteur de niveau d'eau (48); et

une pompe d'approvisionnement en eau (64) comportant des orifices d'aspiration et de refoulement, l'orifice d'aspiration communiquant avec l'orifice de refoulement de la pompe à eau d'alimentation (58) et étant susceptible de communiquer avec le réservoir atmosphérique (38), l'orifice de refoulement de la pompe d'approvisionnement en eau (64) communiquant avec l'admission de la pompe à jet (28).

2. Machine à creuser les tunnels selon la revendication 1, caractérisée en ce que lesdits moyens de transport des déblais comprennent en outre un système de séparation (60) disposé entre le côté refoulement de la pompe de refoulement (42) et le côté aspiration de la pompe à eau d'alimentation (58) et destiné à séparer des déblais l'eau qui y est contenue.

3. Machine à creuser les tunnels selon la revendication 2, caractérisée en ce que les moyens de transport des déblais comprennent:

une première conduite de dérivation (76) qui est disposée entre le côté refoulement de la pompe à eau d'alimentation (58) et le côté aspiration de la pompe de refoulement (42) et dans laquelle est disposée une première valve de dérivation (78);

une seconde conduite de dérivation (72) qui est disposée entre le côté refoulement de la pompe à eau d'alimentation (58) et le réservoir atmosphérique (38) et dans laquelle est disposée une seconde valve de dérivation (74);

une valve à boues (82) disposée entre la première conduite de dérivation (76) et le réservoir atmosphérique (38);

une valve à eau d'entrainement (84) disposée entre la pompe d'approvisionnement en eau (64) et la pompe à jet (28);

un détecteur de pression (80) disposé dans la première conduite de dérivation (76); et

un commutateur pour délivrer sélectivement à la pompe à eau d'alimentation (58) l'un ou l'autre du signal provenant du détecteur de pression (80) et du signal provenant du détecteur de niveau d'eau.

4. Machine à creuser les tunnels selon la revendication 1, caractérisée en ce que le réservoir atmosphérique (38) contient un concasseur (46) disposé au voisinage de l'entrée de ce réservoir atmosphérique (38) et des moyens d'entrainement des déblais (44) disposés sur le fond (50) de ce réservoir atmosphérique (38).

5. Machine à creuser les tunnels selon la revendication 4, caractérisée en ce que les moyens d'entrainement des déblais sont constitués par un transporteur à vis sans fin (44).

# F I G . 1

FIG. 2